# EUROPÄISCHE PATENTSCHRIFT

(11) **EP 2 456 667 B1**
(45) Veröffentlichungstag und Bekanntmachung des Hinweises auf die Patenterteilung: **19.02.2014**
(21) Anmeldenummer: 10735287.4
(22) Anmeldetag: 22.07.2010
(51) Int. Cl.: B64D 11/02, B64D 11/00

(54) **MONUMENT FÜR EINE KABINE EINES FAHRZEUGS**
MONUMENT FOR A CABIN OF A VEHICLE
STRUCTURE POUR CABINE D'UN VEHICULE

(30) Priorität: 23.07.2009 DE 102009034406; 23.07.2009 US 228037 P
(43) Veröffentlichungstag der Anmeldung: 30.05.2012
(73) Patentinhaber: Airbus Operations GmbH, 21129 Hamburg (DE)
(72) Erfinder: TAPPE, Jürgen, 22087 Hamburg (DE); HOLST, Christian, 22605 Hamburg (DE); STURM, Ralph, 22869 Schenefeld (DE); BEHLAU, Gregor, 22765 Hamburg (DE); WALLER, Michael, 22549 Hamburg (DE); TRAUTMANN, Frank, 27419 Vierden (DE); TERSTAL, Arne, 21073 Hamburg (DE)
(74) Vertreter: Kopf, Korbinian Paul
(86) Internationale Anmeldenummer: PCT/EP2010/060635
(87) Internationale Veröffentlichungsnummer: WO 2011/009912

(56) Entgegenhaltungen:
- EP-A2- 0 850 833
- EP-A2- 0 867 365
- EP-A2- 1 209 078
- EP-A2- 1 338 508

## Beschreibung

### BEZUG AUF ZUGEHÖRIGE ANMELDUNGEN

Die vorliegende Anmeldung beansprucht die Priorität der US-Provisional Patentanmeldung Nr. 61/228,037, eingereicht am 23. Juli 2009 und der deutschen Patentanmeldung Nr. 10 2009 034 406.3, eingereicht am 23. Juli 2009.

### TECHNISCHES GEBIET DER ERFINDUNG

Die Erfindung betrifft ein Monument für eine Kabine eines Fahrzeugs, die Verwendung eines Monuments in einer Passagierkabine eines Fahrzeugs sowie ein Fahrzeug mit einer Passagierkabine, mindestens einem Passagierkabinenausgang und mindestens einem Monument.

### HINTERGRUND DER ERFINDUNG

Passagierkabinen moderner Fahrzeug zeichnen sich dadurch aus, dass darin nicht nur Einrichtungen zum Unterbringen von Passagieren bereitgestellt werden, sondern auch Einrichtungen, die den Aufenthalt an Bord des Fahrzeugs angenehm gestalten. So befinden sich in Passagierkabinen beispielsweise von Verkehrsflugzeugen üblicherweise unterschiedliche größere Einbauten, die auch unter dem Begriff "Monument" bekannt sind und eine Vielzahl von unterschiedlichen Aufgaben erfüllen können. Ein Monument könnte beispielsweise einen Waschraum mit sanitären Einrichtungen beherbergen, den Passagiere betreten und von innen verschließen können.

Aufgrund des üblicherweise begrenzten Raumangebots in Fahrzeugen weisen Monumente einen stark integrierten Aufbau und dadurch auf kleinstem Raum eine größtmögliche Konzentration von Einrichtungen auf, beispielsweise Sanitärgegenstände, Abfallbehälter, Papierhandtuchspender, Spiegel, Beleuchtungseinrichtungen und dergleichen. Aufgrund der starken Raumbeschränkung sind aus dem Stand der Technik auch vergrößerbare Monumente bekannt, die eine variable Gehäusegestaltung aufweisen und sich beispielsweise in einer Verstauposition nur über eine sehr geringe Bodenfläche eines Kabinenfußbodens erstrecken, in einer Betriebsposition allerdings über eine relativ große Bodenfläche, die sich bis in einen Bereich vor einer Passagierkabinentür erstreckt.

Derzeit sind vergrößerbare Monumente in Form von Duschkabinen, Toiletten und dergleichen bekannt, bei denen erst durch den Vorgang des Vergrößerns die eigentlichen Funktionen genutzt werden können. So zeigt die EP 850833 B1, die als nächstliegender Stand der Technik betrachtet wird, ein Monument, welches in einem vergrößerten, erweiterten Zustand eine Toilette und zusätzlichen Stauraum nutzbar macht. Der Stauraum ist bei diesem Monument in jedem Zustand des Monuments nutzbar. Die vorgesehene Verwendung zur Nutzung als Toilette ist allerdings nur in einem erweiterten Zustand des Grundrisses verfügbar.

In der US 4 589 463 wird ein Monument mit einem vergrößerbaren Grundriss dargestellt, das nur in bestimmten Zuständen des Fahrzeuges eine Verwendung zulässt. Von einer Benutzung dieses Monuments in sicherheitsrelevanten Zonen eines Fahrzeugs muss abgesehen werden.

In der US 6889936 wird ferner eine Sanitärinstallation dargelegt, die eine Vergrößerung des Grundrisses dadurch erreicht, dass eine Sanitärinstallationseinheit drehbar gelagert ist und aus einer verstauten Position in eine Grundriss vergrößernde Position geschwenkt werden kann. Dabei ist die grundsätzliche Betretbarkeit des Monuments zwar erlaubt, die Nutzung der Sanitärinstallation bleibt in der verstauten Position allerdings verwehrt.

### ZUSAMMENFASSUNG DER ERFINDUNG

Es könnte als nachteilig empfunden werden, ein vergrößerbares Monument in einem Fahrzeug nur innerhalb unterschiedlicher Operationsphasen eines Fahrzeugs verwenden zu können. Dementsprechend könnte es als Aufgabe der Erfindung angesehen werden, ein Monument für eine Kabine eines Fahrzeugs vorzuschlagen, dessen Grundriss vergrößerbar ist, so dass die Fläche der Passagierkabine in dem Fahrzeug optimal genutzt werden kann. Eine weitere Aufgabe der Erfindung liegt darin, in einem vergrößerbaren Monument sämtliche Grundfunktionen sowohl bei verkleinertem als auch bei vergrößertem Grundriss bereitzustellen.

Die Aufgabe wird gelöst durch ein Monument für eine Kabine eines Fahrzeugs gemäß den Merkmalen des unabhängigen Anspruchs 1. Vorteilhafte Weiterbildungen sind den Unteransprüchen zu entnehmen.

Gemäß einem ersten Aspekt der vorliegenden Erfindung weist das erfindungsgemäße Monument ein erstes Gehäuseteil mit einer Bodenseite und einer Verbindungsseite auf, ein zweites Gehäuseteil mit einer Bodenseite und einer Verbindungsseite sowie mindestens ein erstes Verkleidungselement. Das erste Gehäuseteil ist dazu eingerichtet, mit seiner Bodenseite an einem Boden der Kabine befestigt zu werden. Zum Einschieben eines der Gehäuseteile in das andere Gehäuseteil ist ein äußerer Querschnitt der Verbindungsseite eines der Gehäuseteile kleiner dimensioniert als ein Öffnungsquerschnitt der Verbindungsseite des anderen Gehäuseteils. Das erste Gehäuseteil und das zweite Gehäuseteil bilden damit ein Gehäuse, welches das Monument nach außen hin begrenzt. Das erste Gehäuseteil und/oder das zweite Gehäuseteil weist Verriegelungsmittel zum Arretieren des zweiten Gehäuseteils in einer ersten Relativposition und in einer zweiten Relativposition zum ersten Gehäuseteil auf. Das erste Verkleidungselement dient dazu, einen Spalt zwischen der Verbindungsseite des ersten Gehäuseteils und des zweiten Gehäuseteils in der zweiten Relativposition zu verkleiden.

Mit anderen Worten besteht das erfindungsgemäße Monument aus zwei Teilmonumenten, die jeweils durch ein Gehäuseteil realisiert sind. Ein erstes Gehäuseteil ist am Boden der Passagierkabine des Fahrzeugs fest zu montieren. An einer offenen Seite kann das zweite Teilmonument in Form des zweiten Gehäuseteils angeordnet werden. Die Öffnung des ersten Gehäuseteils ist dementsprechend so auszulegen, dass das zweite Gehäuseteil in die Öffnung des ersten Gehäuseteils einschiebbar ist. Andererseits kann umgekehrt auch der Öffnungsquerschnitt des zweiten Gehäuseteils derart ausgelegt sein, dass das zweite Gehäuseteil über das erste Gehäuseteil geschoben werden kann. Diese zwei Gehäuseteile bilden das gesamte Monument, wobei sich das zweite Gehäuseteil zum Einstellen, d.h. zum Vergrößern oder zum Verkleinern, der überdeckten Bodenfläche relativ zum Boden verschieben lässt. Beim Verschieben des zweiten Gehäuseteils von einer ersten Relativposition in eine zweite Relativposition entsteht zumindest an einer Außenseite des Gehäuses ein Spalt, den es zu verdecken gilt.

Als besondere Maßnahme weist das erfindungsgemäße Monument ein erstes Verkleidungselement mit einer beliebigen Bauweise auf, die das erste Verkleidungsmittel dazu befähigt, den Spalt zwischen dem ersten Gehäuseteil und dem zweiten Gehäuseteil zu verdecken. Es sind beliebige feste Materialien, wie etwa Kunststoffe, faserverstärkte Kunststoffe oder andere Verbundmaterialien, Sandwichplatten und dergleichen denkbar. Andererseits wären auch flexible Materialien durch entsprechende Dehnung, Abrollung, Abwicklung oder dergleichen dazu geeignet, über den Spalt gezogen zu werden, um das Gehäuse vollständig zu verschließen. Zusätzlich könnte auch ein zweites Verkleidungselement vorgesehen werden, das das erste Verkleidungselement ergänzt. Das zweite Verkleidungselement könnte etwa klappbar, abrollbar oder ausziehbar an dem ersten Verkleidungselement angeordnet sein, oder auch an einem der Gehäuseteile.

Das erfindungsgemäße Monument könnte in einem Bereich der Passagierkabine des Fahrzeugs angeordnet werden, in dessen unmittelbarer Nähe eine Passagierkabinentür angeordnet ist. In einem zusammengeschobenen Zustand, d.h. bei Einnahme der ersten Relativposition, endet die Erstreckung des erfindungsgemäßen Monuments neben der in diesem Zustand vollständig benutzbaren Passagierkabinentür. Ist in einer Operationsphase des Fahrzeugs vorgesehen, die Passagierkabinentür geschlossen zu halten, beispielsweise bei einem Flugzeug während des Fluges, kann das erfindungsgemäße Monument auseinandergeschoben werden, wobei das zweite Gehäuseteil dann die zweite Relativposition einnimmt. Die Erstreckung des gesamten Gehäuses des erfindungsgemäßen Monuments endet dann beispielsweise in einem Bereich, der die Passagierkabinentür zumindest teilweise überdeckt. Dies ist aufgrund der nicht vorgesehenen Benutzung der Passagierkabinentür zulässig, wodurch der nur beim Ein- und Aussteigen verwendete und häufig relativ großzügig dimensionierte Raum vor der Passagierkabinentür während der Operationsphase des Fahrzeugs zumindest teilweise einer anderen Verwendung zugeführt werden kann. Dies steigert wiederum den Komfort innerhalb des Monuments und eliminiert gleichzeitig die Notwendigkeit, andere Einbauten aus der Passagierkabine des Fahrzeugs zum Unterbringen eines dauerhaft größeren Monuments zu entfernen.

Zum Eintreten in das erfindungsgemäße Monument ist eine Zutrittsöffnung vorgesehen, die bevorzugt parallel zu einer Erstreckungsachse des erfindungsgemäßen Monuments angeordnet ist. Die Erstreckungsachse ist als die Achse zu verstehen, in der die Relativbewegung der beiden Gehäuseteile zueinander erfolgt. Die parallel zu dieser Erstreckungsachse angeordnete Zutrittsöffnung erlaubt eine senkrecht zu der Erstreckungsrichtung verlaufende Bewegung auf dem Boden der Passagierkabine in das erfindungsgemäße Monument hinein. Eine derartige Öffnung ist sowohl bei verkleinertem Grundriss mit dem zweiten Gehäuseteil in erster Relativposition als auch bei vergrößertem Grundriss mit dem zweiten Gehäuseteil in erster Relativposition benutzbar. Das erste Gehäuseteil und das zweite Gehäuseteil sind jeweils derart ausgestaltet, dass die Zutrittsöffnung in jeder der beiden Relativpositionen vollständig frei bleibt. Dies könnte bedeuten, dass das zweite Gehäuseteil einen Ausschnitt aufweist, der in der ersten Relativposition bei zusammengeschobenen Monument mit einer im ersten Gehäuseteil angeordneten Zutrittsöffnung fluchtet oder umgekehrt. Bei ausgefahrenem Monument mit dem zweiten Gehäuseteil in der zweiten Relativposition wird der Spalt zwischen den beiden Gehäuseteilen durch diesen Ausschnitt gebildet, der dann durch das erste Verkleidungselement verdeckt werden muss.

Die Erstreckungsrichtung des erfindungsgemäßen Monuments ist vorteilhaft parallel zu einer Wand der Kabine ausgerichtet, so dass von vor oder hinter dem erfindungsgemäßen Monument angeordneten Sitzplätzen ein direkter Einblick in eine geöffnete Zutrittsöffnung oder auf eine durch die Zutrittsöffnung schreitende Person nicht möglich ist.

Das zweite Gehäuseteil ist in einer bevorzugten Weiterbildung des erfindungsgemäßen Monuments an einer Führungseinrichtung relativ zum ersten Gehäuseteil bewegbar gelagert. In Betracht kommen jegliche Führungseinrichtungen, die ein leichtes Gleiten des zweiten Gehäuseteils erlauben, so dass das zweite Gehäuseteil von einer einzigen Person leicht verschoben werden kann. Die Führung und Lagerung des zweiten Gehäuseteils könnte durch eine auf dem Kabinenfußboden befindliche Führungseinrichtung ebenso gewährleistet werden wie durch eine zwischen dem ersten Gehäuseteil und dem zweiten Gehäuseteil angeordnete Führungseinrichtung nach Art eines Schubladenauszugs.

In einer vorteilhaften Weiterbildung des erfindungsgemäßen Monuments ist das Verriegelungsmittel dazu eingerichtet, das erste Gehäuseteil und das zweite Gehäuseteil bedarfsweise starr miteinander zu verbinden. Hierzu werden durch entsprechende Betätigungseinrichtungen die beiden Gehäuseteile an ihren Oberseiten und/oder Unterseiten und/oder Seitenflächen über entsprechende und im Stand der Technik bekannte Mechanismen so miteinander verbunden, dass sie sich nicht mehr relativ zueinander bewegen lassen. Ist eine Führungseinrichtung zum Führen des zweiten Gehäuseteils zwischen dem ersten Gehäuseteil und dem zweiten Gehäuseteil vorgesehen, kann die Arretierung des zweiten Gehäuseteils auch durch Klemmen oder Sperren der Führungseinrichtung erfolgen.

Alternativ oder zusätzlich hierzu könnte das zweite Gehäuseteil in einer vorteilhaften Ausführungsform des erfindungsgemäßen Monuments bedarfsweise mit dem Kabinenfußboden und/oder mit einer Kabinendecke verbunden werden, so dass ein Arretieren des zweiten Gehäuseteils unabhängig von dem ersten Gehäuseteil erfolgen kann.

In einer vorteilhaften Weiterbildung des erfindungsgemäßen Monuments weist das Verriegelungsmittel zum Arretieren des zweiten Gehäuseteils in sämtlichen Raumrichtungen mindestens eine Betätigungseinrichtung auf. Diese könnte etwa zum Einbringen mindestens eines Riegelkörpers in mindestens eine korrespondierende Riegelkörperaufnahme im Kabinenfußboden und/oder in der Kabinendecke und/oder in dem ersten Gehäuseteil dienen. Der Riegelkörper könnte dabei quer zur Erstreckungsrichtung des erfindungsgemäßen Monuments bzw. zur Verschieberichtung des zweiten Gehäuseteils in die betreffende Riegelkörperaufnahme bewegt werden. Hierdurch wird eine besonders leichte Arretierbarkeit des zweiten Gehäuseteils relativ zu dem daran fest angeordneten ersten Gehäuseteil ermöglicht. Bevorzugt wird der Riegelkörper bei Erreichen seiner Endposition verriegelt.

In einer vorteilhaften Weiterbildung des erfindungsgemäßen Monuments ist diese Betätigungseinrichtung ein verschiebbarer, drehbarer, drückbarer oder herausziehbarer Handgriff, der über geeignete Verbindungsmittel den betreffenden Riegelkörper bewegt. Denkbar ist beispielsweise ein drehbarer Handgriff, der mittig und gut für einen Bediener erreichbar an einer Seitenfläche des zweiten Gehäuseteils angeordnet ist und über ein linienförmiges elastisches oder festes Bewegungsmittel, etwa eine Art Bowdenzug oder eine Stange, einen Riegelkörper bewegt.

In einer vorteilhaften Weiterbildung des erfindungsgemäßen Monuments ist das Verkleidungselement ein bewegbar an dem ersten Gehäuseteil oder dem zweiten Gehäuseteil angeordnetes Wandelement. Dieses Wandelement könnte bei einem zusammengeschobenen erfindungsgemäßen Monument mit dem zweiten Gehäuseteil in der ersten Relativposition an einer Seitenfläche des Monuments angeordnet werden, so dass in dieser Position eine Zutrittsöffnung des erfindungsgemäßen Monuments nicht behindert wird. In einem auseinandergeschobenen Zustand mit dem zweiten Gehäuseteil in der zweiten Relativposition kann dieses Wandelement zu dem Spalt geklappt, ausgelenkt oder verschwenkt und dort arretiert werden.

Bei einer vorteilhaften Weiterbildung des erfindungsgemäßen Monuments weist das Gehäuse einen flexiblen Fußboden auf, der sich zwischen dem ersten Gehäuseteil und dem zweiten Gehäuseteil erstreckt. Das erste Gehäuseteil und/oder das zweite Gehäuseteil kann weiterhin Aufnahmemittel zum Verstauen und Freigeben einer überschüssigen Fußbodenlänge, d.h. eines Teils des flexiblen Fußbodens aufweisen. Wäre der Fußboden des erfindungsgemäßen Monuments unflexibel und derart bemessen, dass er ein auseinandergeschobenes Monument mit dem zweiten Gehäuseteil in der zweiten Relativposition vollständig ausfüllen würde, würde der Fußboden beim Zusammenschieben des erfindungsgemäßen Monuments stören oder das Zusammenschieben verhindern. Wäre der Fußboden unflexibel und derart bemessen, dass er das erfindungsgemäße Monument in zusammengeschobenen Zustand vollständig ausfüllen würde, wäre der Fußboden bei auseinander geschobenem erfindungsgemäßen Monument zu kurz. Bei flexibler Ausgestaltung kann durch verschiedenartige Aufnahmemittel erreicht werden, beim Zusammenschieben des erfindungsgemäßen Monuments eine überschüssige Fußbodenlänge aufzunehmen. Dies sollte bevorzugt derart ausgeführt werden, dass die überschüssige Fußbodenlänge im zusammengeschobenen Zustand des erfindungsgemäßen Monuments nicht sichtbar ist und etwa hinter diverser Einbauten verschwindet.

In einer vorteilhaften Ausführungsform des erfindungsgemäßen Monuments weist der flexible Fußboden mindestens einen festen Abschnitt und mindestens einen lamellenartigen Abschnitt auf. Dadurch entsteht mechanisch einfach ein stabiler, Fußboden, dessen lamellenartiger Abschnitt bedarfsweise mit Aufnahmemitteln aufgenommen werden kann. Dies kann nach Art eines Schubladenauszugs realisiert werden bzw. nach Art eines Jalousienschranks mit einer verschiebbaren Jalousie zum Freigeben oder Verschließen einer Schranköffnung.

In einer ebenso vorteilhaften Ausführungsform weist der Fußboden einen flexiblen Fußbodenbelag auf, der über einen Randabschluss des Fußbodens eine Bodenwanne bildet. Dadurch kann gewährleistet werden, dass eventuell in dem erfindungsgemäßen Monument auftretende Verschmutzungen oder Flüssigkeiten nicht nach außen treten.

Günstig wäre in einer vorteilhaften Weiterbildung des erfindungsgemäßen Monuments, die überschüssige Fußbodenlänge über als Führungsmittel ausgeführte Aufnahmemittel in vertikaler Richtung in einen Randbereich des ersten Gehäuseteils und/oder des zweiten Gehäuseteils zu führen. Das oder die Führungsmittel könnten sich hinter Einbauten erstrecken, so dass der aufgenommene überschüssige Teil des Fußbodens aus dem zusammengeschobenen erfindungsgemäßen Monument nicht mehr sichtbar ist. Derartige Einbauten könnten sich als Staufächer, Stauschränke, Abdeckplatten, Sanitärgegenstände oder dergleichen realisieren lassen. Besonders bevorzugt wird der aufzunehmende Teil des Fußbodens unter den Einbauten in vertikaler Richtung an einer Wand des ersten und/oder des zweiten Gehäuseteils geführt. Der überschüssige Teil des Fußbodens ist demnach für den Benutzer des erfindungsgemäßen Monuments versteckt, während der restliche Teil des flexiblen Fußbodens eine herkömmliche Weiterverwendung zulässt. Dies eliminiert die Notwendigkeit eines passend für einen Zustand des erfindungsgemäßen Monuments zugeschnittenen Fußbodenbelags, der entweder bei zusammengeschobenen erfindungsgemäßen Monument aus dem Gehäuse ragt oder bei auseinandergeschobenem erfindungsgemäßen Monument zu kurz ist und daher der Fußbodenbelag der Kabine in dem Bereich neben der Kabinentür potentiell einer zusätzlichen Verschmutzung ausgesetzt ist. Neben Führungsmitteln könnten auch walzen- oder rollenartige Einrichtungen zum Aufrollen des Fußbodens verwendet werden.

In das erfindungsgemäße Monument ist ein erster Einrichtungsgegenstand bewegbar in dem Gehäuse angeordnet und in einer ersten Betriebsposition und in einer zweiten Betriebsposition arretierbar. Dies ist ein erster Sanitärgegenstand, etwa eine Toilettenschüssel oder dergleichen, der bei zusammengeschobenem erfindungsgemäßen Monument in einer ersten Betriebsposition angeordnet ist, während er bei einem auseinandergeschobenen erfindungsgemäßen Monument in einer zweiten Betriebsposition arretiert wird. So kann einem Benutzer eine größtmögliche Bequemlichkeit bei der Benutzung des ersten Sanitärgegenstands gewährleistet werden. Diese Möglichkeit des Verschiebens des ersten Einrichtungsgegenstands kann auf andere Einrichtungsgegenstände übertragen werden und ist nicht auf Sanitärgegenstände beschränkt.

Hierbei ist anzumerken, dass neben einer sukzessiven manuellen Durchführung das Verschieben und wahlweise auch das Arretieren des ersten Einrichtungsgegenstands und das Arretieren und Lösen des zweiten Einrichtungsgegenstands auch mit dem Verschieben des zweiten Gehäuseteils gekoppelt werden kann. Dadurch erreicht der erste Einrichtungsgegenstand seine Betriebsposition automatisch beim Vergrößern des erfindungsgemäßen Monuments.

Bei einer weiteren vorteilhaften Ausgestaltung des erfindungsgemäßen Monuments ist das Monument als Bordtoilettenmonument ausgeführt. Derartige Bordtoilettenmonumente werden in dem Fahrzeug von vielen Passagieren nacheinander frequentiert, so dass das Komfortempfinden sämtlicher Passagiere in der Passagierkabine durch das erfindungsgemäße Monument mit höherem Raumangebot deutlich gesteigert werden kann.

Ein bevorzugtes erfindungsgemäßes Monument weist einen bewegbar an dem ersten Gehäuseteil oder dem zweiten Gehäuseteil angeordneten zweiten Einrichtungsgegenstand auf, wobei der zweite Einrichtungsgegenstand in eine Gebrauchsposition und in eine Arretierpösition bringbar ist. Dies könnte, beim Beispiel des Bordtoilettenmonuments bleibend, ein Urinal sein, das bei Bedarf aus einer Arretierposition herausgeschwenkt, herausgeklappt, ausgelenkt oder herausgefahren wird und daraufhin von einer Person verwendet werden kann. Dies könnte etwa manuell oder automatisiert erfolgen, letzteres beispielsweise über einen Näherungsschalter oder ein Bedienelement durch eine Benutzer individuell gesteuert. Dies reduziert deutlich den Platzbedarf innerhalb des erfindungsgemäßen Monuments, da zusätzliche Komfortfunktionen nicht dauerhaft bereitgestellt werden müssen, steigert gleichzeitig die Funktionsvielfalt und damit das Komfortempfinden des einzelnen Passagiers.

In einer vorteilhaften Weiterbildung des erfindungsgemäßen Monuments ist das Gehäuse dazu eingerichtet, bei Einnehmen der ersten Relativposition des zweiten Gehäuseteils zum ersten Gehäuseteil, also in zusammengeschobenen Zustand, den zweiten Einrichtungsgegenstand in der Arretierposition zu verriegeln. Befindet sich das erfindungsgemäße Monument in dem zusammengeschobenen Zustand, würde ansonsten das Herausschwenken möglicherweise den zur Verfügung stehenden Raum innerhalb des erfindungsgemäßen Monuments überschreiten.

Gemäß einer weiteren vorteilhaften Ausführungsform des erfindungsgemäßen Monuments ist der zweite Einrichtungsgegenstand ein erster Sanitärgegenstand mit einem Abfluss, wobei der Abfluss mit einer Abflussleitung verbunden ist, deren Enden zueinander bewegbar sind. Durch ein Verschieben des ersten Einrichtungsgegenstands muss diese Bewegbarkeit gewährleistet werden können, so dass der Abfluss in jedem Zustand des erfindungsgemäßen Monuments voll funktionsfähig bleibt, was durch eine Abflussleitung ermöglicht wird, deren Enden zueinander bewegbar sind. Dies kann sowohl durch steife und gelenkig miteinander verbundene Rohrleitungen erfüllt werden, als auch durch versteifte Schlauchanordnungen, die dazu geeignet sind, ausgeprägten Saugdrücken zu widerstehen.

In einer vorteilhaften Weiterbildung des erfindungsgemäßen Monuments weist die Abflussleitung mindestens ein erstes Abflussleitungsteilstück und ein zweites Abflussleitungsteilstück auf, die über eine flexible Verbindung, etwa ein Gelenkstück, die Abflussleitung bilden. Hierdurch können zur Realisierung der Abflussleitung herkömmliche, steife Rohrleitungen oder dergleichen verwendet werden, die auch stärkere Saugdruckdifferenzen bewältigen können.

Schließlich ist in einer vorteilhaften Weiterbildung des erfindungsgemäßen Monuments das Monument zum Einbau in eine Passagierkabine eines Flugzeugs ausgeführt. Dies bedeutet insbesondere die Verwendung von möglichst geringe Dichte aufweisenden Materialien, die Verwendung hochfester Faserverbundwerkstoffe, Sandwichplatten mit Wabenkern und dergleichen, so dass bei einem möglichst geringen Gewicht eine ausreichende Stabilität des Gehäuses und sämtlicher Einbauten erreicht werden kann.

Der besondere Vorteil des erfindungsgemäßen Monuments liegt darin, dass üblicherweise ungenutzter Raum während der Operation des Fahrzeugs durch die Flächenerweiterung des erfindungsgemäßen Monuments genutzt und beim Besteigen oder Aussteigen des Fahrzeugs wieder zugänglich gemacht werden kann. Das erfindungsgemäße Monument kann vielfältige Aufgaben erfüllen und etwa als Bordtoilette, Waschraum, Umkleideraum oder dergleichen verwendet werden.

Es ist darauf hinzuweisen, dass sämtliche Bewegungsabläufe, die das zweite Gehäuseteil, Verriegelungsmittel, den ersten und den zweiten Einrichtungsgegenstand betreffen, nicht nur manuell sondern auch automatisch, d.h. elektrisch, pneumatisch, hydraulisch oder auf andere Weise durchgeführt werden können.

Die Aufgabe wird ferner durch die Verwendung eines oben beschriebenen Monuments einer Passagierkabine eines Fahrzeugs gelöst.

Weiterhin wird die Aufgabe gelöst durch ein Fahrzeug mit einer Passagierkabine, mindestens einem Passagierkabinenausgang und mindestens einem Monument, wobei das Monument ein erstes Gehäuseteil mit einer Bodenseite und einer Verbindungsseite aufweist, ein zweites Gehäuseteil mit einer Bodenseite und einer Verbindungsseite und mindestens ein erstes Verkleidungselement. Das erste Gehäuseteil ist mit seiner Bodenseite an einem Boden der Kabine befestigt. Die Gehäuseteile sind gemäß vorangehender Beschreibung ausgestaltet. Hierbei ist es möglich, das zweite Gehäuseteil in einer ersten Position neben dem Passagierkabinenausgang und in einer zweiten Position vor dem Passagierkabinenausgang zu arretieren.

### KURZE BESCHREIBUNG DER ZEICHNUNGEN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
Fig. 1 zeigt ein erfindungsgemäßes Monument in einer dreidimensionalen Ansicht in einem auseinandergeschobenen Zustand.
Fig. 2 zeigt ein erfindungsgemäßes Monument in einer dreidimensionalen Ansicht aus einer anderen Perspektive in einem eingeschobenen Zustand.
Fig. 3 zeigt ein erfindungsgemäßes Monument in einer dreidimensionalen Ansicht aus einer weiteren Perspektive in einem auseinandergeschobenen Zustand.
Fig. 4a und 4b zeigen einen Abfluss für einen ersten Sanitärgegenstand in dem erfindungsgemäßen Monument.
Die Fig. 5a und 5b zeigen einen flexiblen Fußboden des erfindungsgemäßen Monuments in einer dreidimensionalen Ansicht.
Die Fig. 6a und 6b zeigen das erfindungsgemäße Monument in einer Draufsicht in einem auseinandergeschobenen und einem zusammengeschobenen Zustand.
Fig.7 zeigt ein Flugzeug mit einer Passagierkabine und mindestens einem darin angeordneten Monument.

### DETAILLIERTE DARSTELLUNG EINES EXEMPLARISCHEN AUSFÜHRUNGSBEISPIELS

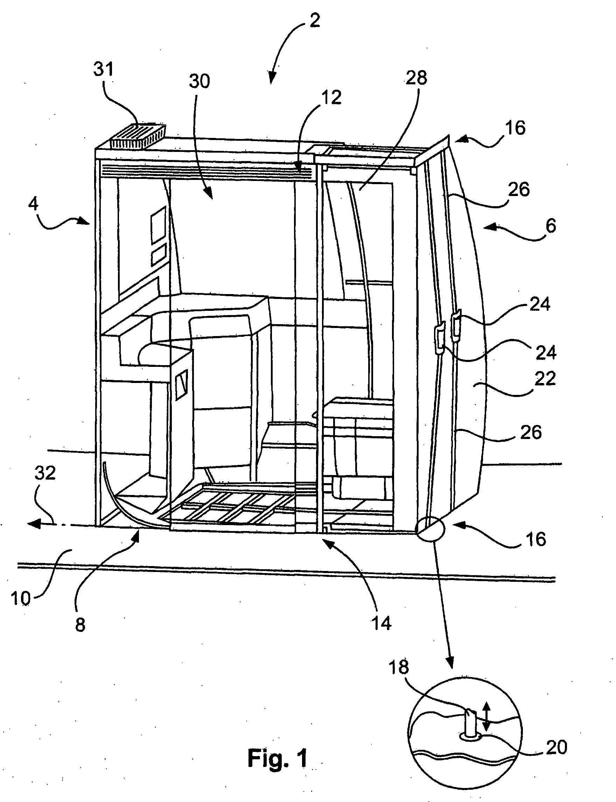

Fig. 1 zeigt ein erfindungsgemäßes Monument 2 mit einem ersten Gehäuseteil 4 und einem zweiten Gehäuseteil 6. Das erste Gehäuseteil 4 ist mit einer Bodenseite 8 an einem Kabinenfußboden 10 befestigt. Das zweite Gehäuseteil 6 weist an einer Verbindungsseite 12 einen Querschnitt auf, der ein Einschieben des zweiten Gehäuseteils 6 in eine Verbindungsseite 14 des ersten Gehäuseteils 4 erlaubt.

Aus der Darstellung ist ersichtlich, dass das Gehäuseteil 4 und das zweite Gehäuseteil zusammen ein Gehäuse bilden, das die äußeren Abmessungen des erfindungsgemäßen Monuments 2 definiert. Durch ein vollständiges Einschieben des zweiten Gehäuseteils 6 in das erste Gehäuseteil 4, was einer ersten Relativposition entspricht, erreicht das erfindungsgemäße Monument 2 seine Minimalgröße. Beim vollständigen Herausziehen des zweiten Gehäuseteils 6 aus dem ersten Gehäuseteil 4, was einer zweiten Relativposition entspricht, erreicht das erfindungsgemäße Monument 2 seine Maximalgröße.

Zum Arretieren des zweiten Gehäuseteils 6 in der ersten Relativposition, weist das zweite Gehäuseteil 6 Verriegelungsmittel 16 auf. Diese könnten als Riegelkörper 18 ausgeführt werden, die in entsprechende korrespondierende Riegelkörperaufnahmen 20 des Kabinenfußbodens 10 oder einer nicht dargestellten Kabinendecke eingebracht werden können. Exemplarisch ist eine Seitenfläche 22 des zweiten Gehäuseteils 6 mit zwei als Handgriffe ausgeführten Betätigungseinrichtungen 24 ausgestattet, die jeweils über Bewegungsmittel 26 die Verriegelungsmittel 16 bewegen. Die Bewegungsmittel 26 könnten linienförmig, etwa als Schubstangen, ausgeführt sein. Gleichermaßen wäre auch denkbar, die Riegelkörper 18 mittels einer Federkraft in die entsprechenden Riegelkörperaufnahmen 20 zu drücken und über die Betätigungseinrichtungen 24 und daran angeschlossene Draht- oder Seilzüge bedarfsweise aus den Riegelkörperaufnahmen 20 herauszuziehen.

Zwischen dem ersten Gehäuseteil 4 und dem zweiten Gehäuseteil 6 befindet sich ein erstes Verkleidungselement 28, das einen Spalt zwischen dem ersten Gehäuseteil 4 und dem zweiten Gehäuseteil 6 verdeckt. Wie in der Darstellung aus Fig. 1 ersichtlich weist das erfmdungsgemäße Monument 2 eine Zutrittsöffnung 30 auf, die parallel zu einer Erstreckungsrichtung 32 des erfindungsgemäßen Monuments 2 verläuft. Wäre das erste Verkleidungselement 28 fest an dem zweiten Gehäuseteil 6 angeordnet, würde es in einem zusammengeschobenen Zustand des erfindungsgemäßen Monuments 2 die Zutrittsöffnung 30 verschließen. Das erste Verkleidungselement 28 ist allerdings dazu eingerichtet, lediglich bei Bedarf eingesetzt zu werden, so dass es in einem zusammengeschobenen Zustand des erfindungsgemäßen Monuments 2 die Zutrittsöffnung 30 nicht behindert.

Das Verschieben des zweiten Gehäuseteils 6 kann optional durch eine Antriebseinrichtung 31 erfolgen, die lediglich beispielhaft an der Oberseite des erfindungsgemäßen Monuments 2 angeordnet ist. Die Antriebseinrichtung 31 kann eine beliebige Funktionsweise besitzen und etwa elektrisch, pneumatisch oder hydraulisch eine Bewegung umsetzen.

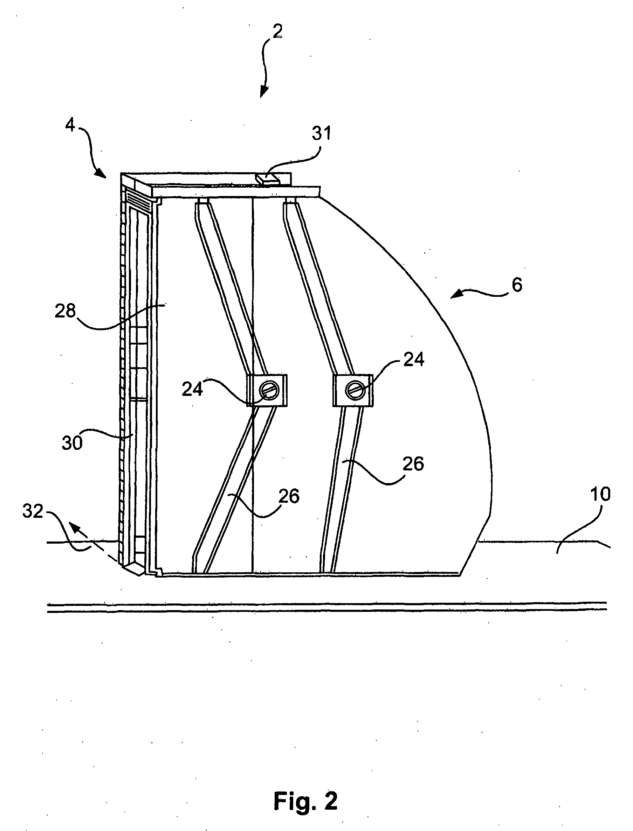

In Fig. 2 wird gezeigt, wie das erste Verkleidungselement 28 bedarfswiese aktiviertbar als schwenkbar gehalterte Tür oder Klappe ausgeführt und am zweiten Gehäuseteil 6 angeordnet sein kann, um den Spalt zwischen dem ersten Gehäuseteil 4 und dem zweiten Gehäuseteil 6 in der zweiten Relativposition, das heißt bei maximal ausgezogenem zweiten Gehäuseteil 6, zu verkleiden. Befindet sich das zweite Gehäuseteil 6 in der ersten Relativposition zum ersten Gehäuseteil 4, kann das erste Verkleidungselement 28 an die Seitenfläche 22 des zweiten Gehäuseteils 6 geklappt werden. Bevorzugt sind dafür die Betätigungseinrichtungen 24 zum Betätigen der Verriegelungsmittel 16 derart an der Fläche 22 positioniert, dass sie durch das herangeklappte Verkleidungsmittel 28 nicht in ihrer Funktion beeinträchtigt werden.

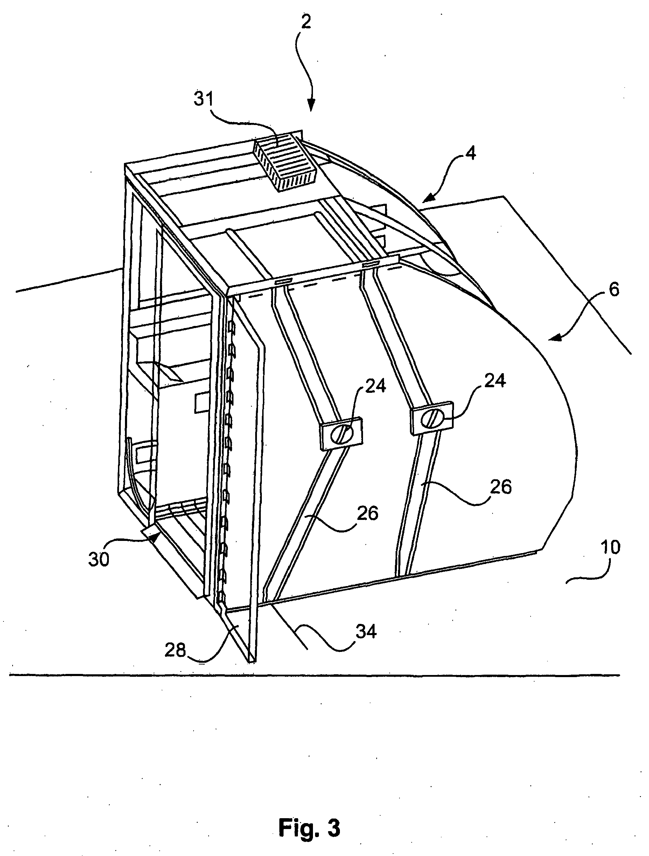

In Fig. 3 ist ferner das Verkleidungselement 28 in einer abgeklappten Position zu sehen, die ein Herausziehen des zweiten Gehäuseteils 6 aus dem ersten Gehäuseteil 4 ermöglicht. Der Kabinenfußboden 10 und/oder das erste Gehäuseteil 4 und/oder das zweite Gehäuseteil 6 könnte zum Vereinfachen des Herausziehens geeignete Führungseinrichtungen 34 aufweisen, die beispielsweise als Gleit- oder Rollschiene oder nach Art eines Schubladenauszugs zwischen dem ersten Gehäuseteil 4 und dem zweiten Gehäuseteil 6 ausgeführt sein könnten, von der die gesamte Last des zweiten Gehäuseteils 6 aufgenommen werden. Es ist besonders bevorzugt, dass das zweite Gehäuseteil 6 derart leicht aus dem ersten Gehäuseteil 4 herausgezogen werden kann, dass auch einer einzigen Fahrzeugbegleiterin, etwa einer Stewardess in einem Flugzeug, das Verschieben des zweiten Gehäuseteils 6 möglich ist.

In der gewählten Perspektive der Fig. 3 wird ferner ersichtlich, dass abklappbare bzw. deaktivierbare Verkleidungselemente nur in dem Gehäusebereich mit der Zutrittsöffnung 30 benötigt werden. An der Oberseite oder an der Rückseite des erfindungsgemäßen Monuments 2 können zwei an entsprechenden Gehäuseteilen 4 oder 6 angeordnete Deckenelemente einfach gegeneinander verschoben werden.

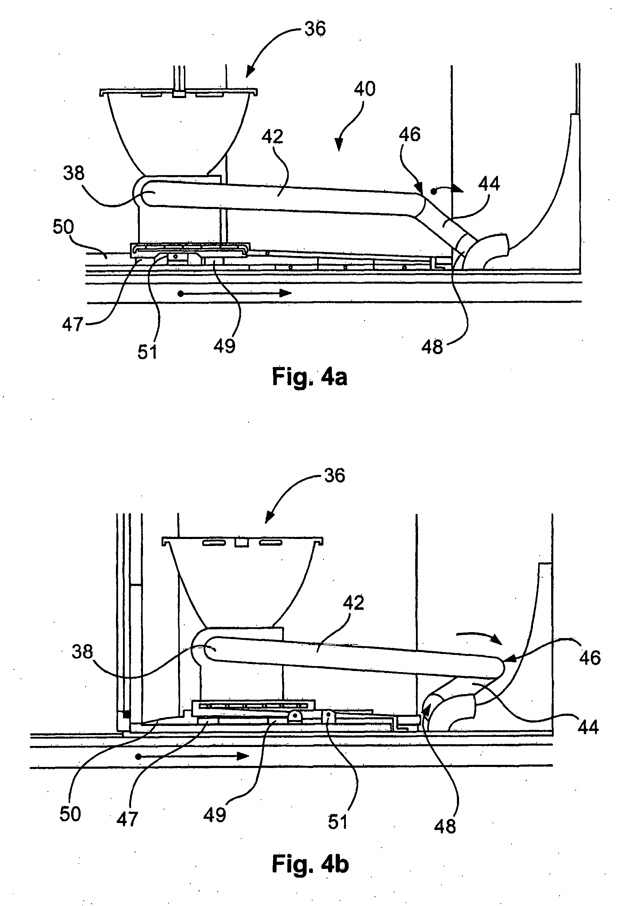

In den Fig. 4a und 4b wird ein erster Sanitärgegenstand 36 gezeigt, der in dem erfindungsgemäßen Monument 2 angeordnet und in vorteilhafter Weise den variablen Raum komfortabel nutzen könnte. Der erste Sanitärgegenstand 36 weist einen Abfluss 38 auf, der mit einer Abflussleitung 40 verbunden ist. Die Abflussleitung 40 weist ein erstes Abflussleitungsteilstück 42, ein zweites Abflussteilstück 44 und ein zwischen den beiden Abflussteilstücken 42 und 44 angeordnetes Gelenk 46 auf. Das erste Abflussteilstück 42 ist ferner gelenkig an dem Abfluss 38 angeordnet. Das zweite Abflussteilstück 44 ist gelenkig an einem Abflussanschluss 48 angeordnet, der sich an einer vorgegebenen Position innerhalb des erfindungsgemäßen Monuments 2 befindet. Durch diese Anordnung mit insgesamt drei gelenkigen Verbindungen ist je nach Ausgestaltung der Abflussleitungsteilstücke 42 und 44 ein Bewegen des ersten Sanitärgegenstands 36 in weiten Grenzen unter steter Beibehaltung der eigentlichen Abflussfunktion ermöglicht. Wird das erfindungsgemäße Monument 2 in einem Flugzeug eingesetzt, bei dem ein Vakuum am Abflussanschluss 48 anliegt, können die Abflussleitung 40 und damit die Abflussleitungsteilstücke 42 und 44 aus einem steifen Material ausgeführt sein, so dass die Abflussleitung 40 bei angelegtem Vakuum nicht kollabiert.

In den Fig. 4a und 4b werden zur Verdeutlichung der Bewegbarkeit des ersten Sanitärgegenstands 36 und der Abflussleitung 42 zwei unterschiedliche Positionen des ersten Sanitärgegenstands 36 gezeigt. Der erste Sanitärgegenstand 36 könnte sich beispielsweise bei Einnehmen der ersten Relativposition des zweiten Gehäuseteils 6 zu dem ersten Gehäuseteil 4 wie in 4a dargestellt innerhalb des erfindungsgemäßen Monuments 2 befinden, bei Einnehmen der zweiten Relativposition wie in Fig. 4b gezeigt. Zur besseren Bewegbarkeit des ersten Sanitärgegenstands 36 in dem erfindungsgemäßen Monument ist bevorzugt ein Führungsmittel 50 in dem erfindungsgemäßen Monument 2 angeordnet, das etwa als eine Schiene ausgeführt sein könnte, auf der ein Gleitelement 51 verschiebbar ist. Dieser Mechanismus könnte zum Halten des ersten Sanitärgegenstands 36 in einer ersten Betriebsposition und in einer zweiten Betriebsposition mittels an vorgegebenen Positionen angeordneten Arretierelementen 47 und 49 erweitert werden. Die Bewegung und die Arretierung des ersten Sanitärgegenstands 36 können mit der Bewegung des zweiten Gehäuseteils 6 gekoppelt werden, so dass automatisch beim Vergrößern oder beim Verkleinern des erfindungsgemäßen Monuments 2 der erste Sanitärgegenstand 36 automatisch an seiner richtigen Betriebsposition angeordnet ist. Dies kann auch, wie in Fig. 1, 2, 3a und 3b gezeigt, durch die Antriebseinrichtung 31 realisiert werden. Alternativ dazu kann der erste Sanitärgegenstand 36 auch durch eine unabhängige und in den Fig. Nicht gezeigte Antriebseinrichtung verschoben und arretiert werden.

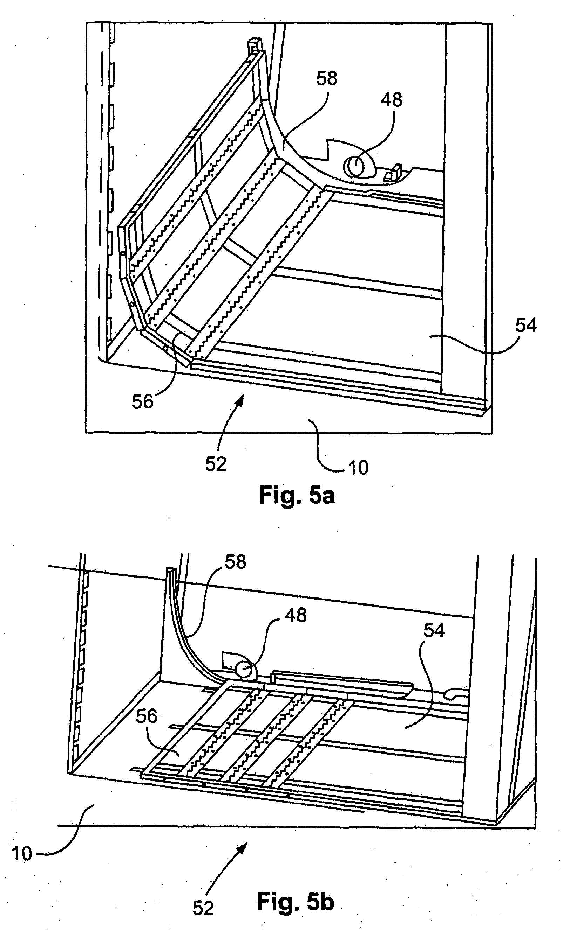

Die Fig. 5a und 5b zeigen ferner einen flexiblen Fußboden 52, der aus einem geraden Fußbodenabschnitt 54 und mehreren daran gelenkig angeordneten lamellenartigen Fußbodenteilstücken 56 besteht. Befindet sich das zweite Gehäuseteil in der ersten Relativposition, wird der überschüssige Anteil des Fußbodens 52, d.h. die die Erstreckung des erfindungsgemäßen Monuments 2 überschreitende Länge des Fußbodens 52, mit Hilfe eines exemplarisch als Führungsschiene ausgeführten Aufnahmemittels 58 in einen Bereich des erfindungsgemäßen Monuments 2 geleitet, in dem die nicht benötigten Fußbodenteilstücke 56 für den Benutzer des erfindungsgemäßen Monuments 2 nicht mehr sichtbar sind. Dies könnte beispielsweise unterhalb eines Staufachs oder dergleichen sein.

Der Vorteil eines derartigen Fußbodens 52 liegt darin, dass der vollständige Bodenbereich des erfindungsgemäßen Monuments 2 einen durchgängigen Fußbodenbelag aufweist, so dass ein darunter liegender Bodenbelag des Fahrzeugs in keiner Relativposition durch den Benutzer des erfindungsgemäßen Monuments 2 beschmutzt wird. Es ist für einen Fachmann verständlich, dass auch andere Arten von Fußböden 52 und Aufnahmemitteln 58 in dem erfindungsgemäßen Monument verwendet werden könnten. So könnten vollelastische Fußböden 52 durch als Rollen oder Walzen ausgeführte Aufnahmemittel 58 aufgenommen oder bedarfsweise wieder freigegeben werden.

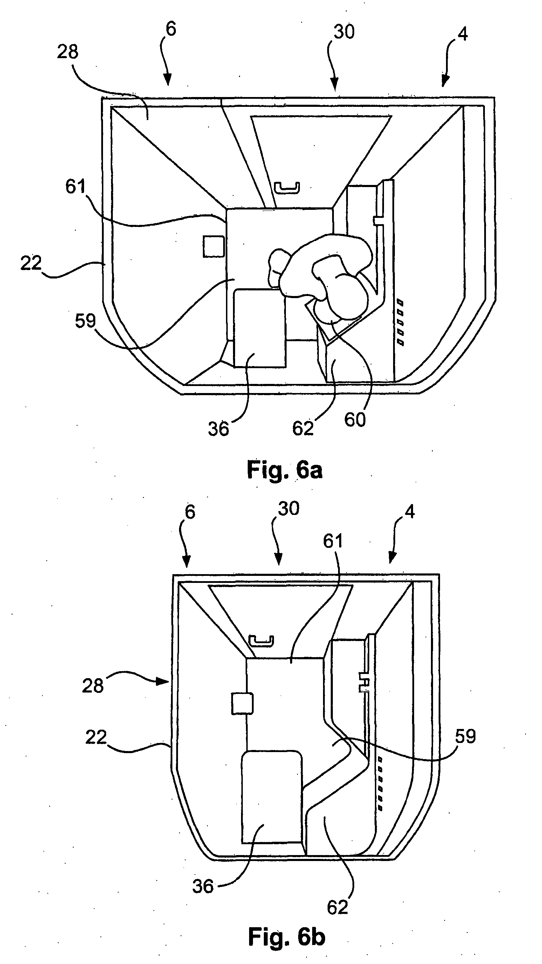

Exemplarisch wird in den Fig. 6a und 6b ein erfindungsgemäßes Monument 2 in einem auseinandergeschobenen Zustand (Fig. 6a) und in einem eingeschobenen Zustand (Fig. 6b) gezeigt. Das erfindungsgemäße Monument 2 könnte etwa einen ersten Sanitärgegenstand 36 aufweisen, der in jedem Betriebsmodus des erfindungsgemäßen Monuments 2 verwendet werden kann. Im zusammengeschobenen Zustand ist der erste Sanitärgegenstand 36 eng an einer Außenwand des erfindungsgemäßen Monuments anliegend positioniert, so dass der Platzbedarf für das erfindungsgemäße Monument 2 in einem eingeschobenen Zustand nicht übermäßig groß ist. Während der Operationsphase des Fahrzeugs und bei ausgezogenem erfindungsgemäßen Monument 2 ist der erste Sanitärgegenstand 36 allerdings etwas von dieser Außenwand des erfindungsgemäßen Monuments 2 abgerückt, so dass eine Benutzung des ersten Sanitärgegenstands 36 erleichtert wird.

Da sich innerhalb des erfindungsgemäßen Monuments in ausgeschobenem Zustand ein Freiraum ergibt, wäre es möglich, innerhalb dieses Freiraums einen zusätzlichen zweiten Sanitärgegenstand 60 zu betreiben, der etwa als ein Urinal ausgeführt ist. Damit es im unbenutzten Zustand nicht stört oder Passagiere innerhalb des erfindungsgemäßen Monuments abstößt, kann der zweite Sanitärgegenstand verschwenkbar innerhalb einer Verkleidung 62 angeordnet werden. Damit in zusammengeschobenem Zustand ein Herausschwenken des zweiten Sanitärgegenstands 60 verhindert wird, könnte eine Arretierung in der Verkleidung 62 angeordnet werden, die in diesem Zustand den zweiten Sanitärgegenstand 60 blockiert.

Das Herausschwenken des zweiten Sanitärgegenstands kann durch ein beliebiges Betätigungsmittel ausgeführt werden, etwa durch einen Knopf oder einen berührungslosen Näherungssensor.

In dieser Darstellung von Fig. 6a und Fig. 6b ist ein Fußbodenbelag 59 ersichtlich, der auf dem eigentlichen flexiblen Fußboden angeordnet ist. Bevorzugt ist der Fußbodenbelag 59 dazu eingerichtet, in Kombination mit einem Randbereich 61 des Fußbodens eine Art Fußbodenwanne auszubilden, die ein Austreten von Verschmutzungen und Flüssigkeiten nach außen verhindert.

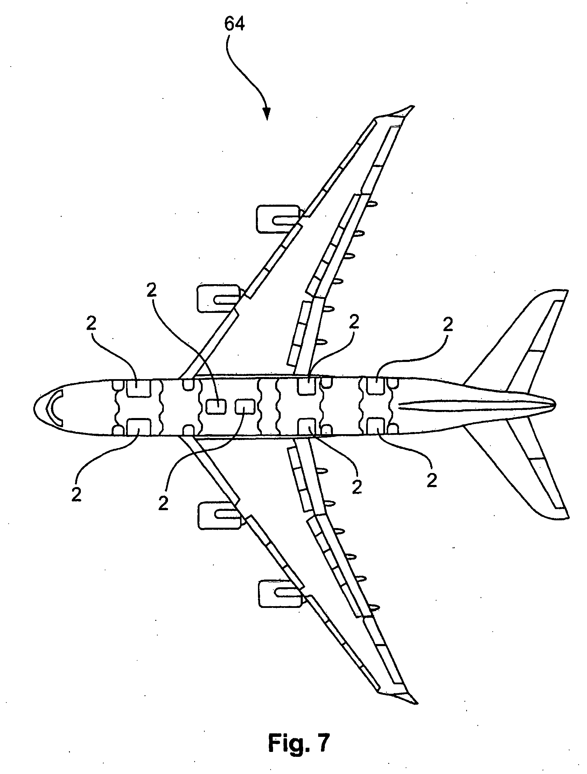

Fig. 7 zeigt ferner ein Flugzeug 64 mit einer Passagierkabine und mehreren lediglich beispielhaft darin angeordneten erfindungsgemäßen Monumenten 2, die sowohl in Bereichen von Passagierkabinentüren 66 als auch in Bereichen mitten in der Passagierkabine angeordnet werden können. Dadurch wird im Reisflug ein Höchstmaß an Komfort in den erfindungsgemäßen Monumenten 2 bereitgestellt, beim Bodenaufenthalt jedoch stets ein ausreichend zügiges Boarding erlaubt.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Monument
- 4: erstes Gehäuseteil
- 6: zweites Gehäuseteil
- 8: Bodenseite
- 10: Fußboden
- 12: Verbindungsseite
- 14: Verbindungsseite
- 16: Verriegelungsmittel
- 18: Riegelkörper
- 20: Riegelkörperaufnahme
- 22: Seitenfläche
- 24: Betätigungseinrichtung
- 26: Bewegungsmittel
- 28: erstes Verkleidungselement
- 30: Zutrittsöffnung
- 31: Antriebseinrichtung
- 32: Erstreckungsrichtung
- 34: Führungseinrichtung
- 36: erster Sanitärgegenstand
- 38: Abfluss
- 40: Abflussleitung
- 42: Abflussleitungsteilstück
- 44: Abflussleitungsteilstück
- 46: Gelenk
- 47: Arretierelement
- 48: Abflussanschluss
- 49: Arretierelement
- 50: Führungsmittel
- 51: Gleitelement
- 52: Fußboden
- 54: fester Abschnitt des Fußbodens
- 56: lamellenartiger Fußbodenabschnitt
- 58: Aufnahmemittel
- 59: Fußbodenbelag
- 60: zweiter Sanitärgegenstand
- 61: Randabschluss
- 62: Verkleidung
- 64: Flugzeug
- 66: Passagierkabinentür

## Patentansprüche

1. Monument (2) für eine Kabine eines Fahrzeugs, das Monument (2) aufweisend
- ein erstes Gehäuseteil (4) mit einer Bodenseite (8) und einer Verbindungsseite (12);
- ein zweites Gehäuseteil (6) mit einer Bodenseite und einer Verbindungsseite (14) und
- mindestens ein erstes Verkleidungselement (28);
wobei das erste Gehäuseteil (4) dazu eingerichtet ist, mit seiner Bodenseite (8) an einem Boden (10) der Kabine befestigt zu werden,
wobei zum Einschieben eines der Gehäuseteile (4, 6) in das andere Gehäuseteil (4, 6) ein äußerer Querschnitt der Verbindungsseite (12, 14) eines der Gehäuseteile (4, 6) kleiner dimensioniert ist als ein Öffnungsquerschnitt der Verbindungsseite (12, 14) des anderen Gehäuseteils (4, 6) und das erste Gehäuseteil (4) und das zweite Gehäuseteil (6) ein Gehäuse bilden,
wobei das erste Gehäuseteil (4) und/oder das zweite Gehäuseteil (6) Verriegelungsmittel (16) zum Arretieren des zweiten Gehäuseteils (6) in einer ersten Relativposition und in einer zweiten Relativposition zum ersten Gehäuseteil (4) aufweist; und
wobei das erste Verkleidungselement (28) an dem ersten Gehäuseteil (4) oder dem zweiten Gehäuseteil (6) zum Verkleiden eines Spalts zwischen der Verbindungsseite des ersten Gehäuseteils (4) und des zweiten Gehäuseteils (6) in der zweiten Relativposition angeordnet ist;
ferner aufweisend einen ersten Einrichtungsgegenstand, der bewegbar in dem Gehäuse angeordnet ist und in einer ersten Betriebsposition und in einer zweiten Betriebsposition arretierbar ist;
wobei der erste Einrichtungsgegenstand ein erster Sanitärgegenstand (36) mit einem Abfluss (38) ist, und
wobei der Abfluss (38) mit einer Abflussleitung (40) verbunden ist, deren Enden zueinander bewegbar sind.

2. Monument (2) nach Anspruch 1, wobei das Verriegelungsmittel (16) dazu eingerichtet ist, das erste Gehäuseteil (4) und das zweite Gehäuseteil (6) bedarfsweise starr miteinander zu verbinden.

3. Monument (2) nach Anspruch 1, wobei das Verriegelungsmittel (16) dazu eingerichtet ist, das zweite Gehäuseteil (6) bedarfsweise mit dem Kabinenfußboden (10) und/oder mit einer Kabinendecke zu verbinden.

4. Monument (2) nach einem der vorhergehenden Ansprüche, wobei das Verriegelungsmittel (16) eine Betätigungseinrichtung (24) zum Aktivieren oder Deaktivieren des Verriegelungsmittels (16) aufweist.

5. Monument (2) nach Anspruch 4, wobei die Betätigungseinrichtung (24) ein verschiebbarer oder drehbarer Handgriff ist, der zum Verriegeln über Bewegungsmittel (26) mindestens einen Riegelkörper (18) in mindestens eine korrespondierende Riegelkörperaufnahme (20) bewegt und in der jeweiligen Endposition verriegelt.

6. Monument (2) nach einem der vorhergehenden Ansprüche,
wobei das erste Verkleidungselement (28) ein bewegbar an dem ersten Gehäuseteil (4) oder dem zweiten Gehäuseteil (6) angeordnetes Wandelement ist.

7. Monument (2) nach einem der vorhergehenden Ansprüche,
wobei das Gehäuse einen flexiblen Fußboden (52) aufweist, der sich zwischen dem ersten Gehäuseteil (4) und dem zweiten Gehäuseteil (6) erstreckt und
wobei das erste Gehäuseteil (4) und/oder das zweite Gehäuseteil (6) Aufnahmemittel (58) zum Verstauen und Freigeben einer überschüssigen Fußbodenlänge aufweist.

8. Monument (2) nach Anspruch 7,
wobei der flexible Fußboden (52) mindestens einen festen Abschnitt (54) und mindestens einen lamellenartigen Abschnitt (56) aufweist.

9. Monument (2) nach Anspruch 7 oder 8,
wobei der Fußboden (52) einen flexiblen Fußbodenbelag (59) aufweist, der über einen Randabschluss (61) des Fußbodens eine Bodenwanne bildet.

10. Monument (2) nach einem der Ansprüche 7 bis 9, aufweisend Führungsmittel als Aufnahmemittel (58) zum Führen der überschüssigen Fußbodenlänge in vertikaler Richtung in einen Randbereich des ersten Gehäuseteils (4) und/oder des zweiten Gehäuseteils (6).

11. Monument (2) nach Anspruch 10, wobei die Abflussleitung (40) mindestens ein erstes Abflussleitungsteilstück (42) und ein zweites Abflussleitungsteilstück (44) aufweist, die über ein Gelenk (46) miteinander verbunden sind.

12. Monument (2) nach einem der vorhergehenden Ansprüche, wobei das Monument (2) ein Bordtoiletten-Monument ist.

13. Monument (2) nach einem der vorhergehenden Ansprüche, ferner aufweisend
einen bewegbar an dem ersten Gehäuseteil (4) oder dem zweiten Gehäuseteil (6) angeordneten zweiten Einrichtungsgegenstand,
wobei der zweite Einrichtungsgegenstand in eine Gebrauchsposition und in eine Arretierposition bringbar ist.

14. Monument (2) nach Anspruch 13,
wobei das Gehäuse dazu eingerichtet ist, bei Einnehmen der ersten Relativposition des ersten Gehäuseteils (4) zum zweiten Gehäuseteil (6) den zweiten Einrichtungsgegenstand in der Arretierposition zu verriegeln.

15. Monument (2) nach Anspruch 13 oder 14,
wobei der zweite Einrichtungsgegenstand zweiter Sanitärgegenstand (60), insbesondere ein Urinal ist.

16. Monument (2) nach einem der vorhergehenden Ansprüche, ausgeführt zum Einbau in eine Passagierkabine eines Flugzeugs (64).

17. Verwendung eines Monuments (2) nach einem der Ansprüche 1 bis 16 in einer Passagierkabine eines Fahrzeugs.

18. Flugzeug (64), mit einer Passagierkabine, mindestens einer Passagierkabinentür (66) und mindestens einem Monumen nach Anspruch 1.

## Claims

1. A monument (2) for a cabin of a vehicle, the monument (2) comprising
- a first housing part (4) with a floor side (8) and a connection side (12);
- a second housing part (6) with a floor side and a connection side (14) and
- at least a first covering element (28);
wherein the first housing part (4) is configured to be attached by its floor side (8) to a floor (10) of the cabin,
wherein for moving one of the housing parts (4, 6) into the other housing part (4, 6) an outer cross-section of the connection side (12, 14) of one of the housing parts (4, 6) is dimensioned so as to be smaller than an opening cross-section of the connection side (12, 14) of the other housing part (4, 6), and the first housing part (4) and the second housing part (6) form a housing,
wherein the first housing part (4) and/or the second housing part (6) comprises locking means (16) for fastening the second housing part (6) in a first relative position and in a second relative position to the first housing part (4), and
wherein the first covering element (28) is arranged on the first housing part (4) or the second housing part (6) for covering a gap between the connection side of the first housing part (4) and of the second housing part (6) in the second relative position;
further comprising a first item of equipment that is movably arranged in the housing and can be fastened in a first operating position and in a second operating position;
wherein the first item of equipment is a first sanitary item (36) with a discharge (38), and
wherein the discharge (38) is connected with a discharge line (40) whose ends are movable relative to each other.

2. The monument (2) of claim 1, wherein the locking means (16) is configured to rigidly interconnect the first housing part (4) and the second housing part (6), if required.

3. The monument (2) of claim 1, wherein the locking means (16) is configured to connect the second housing part (6) with the cabin floor (10) and/or with a cabin ceiling, if required.

4. The monument (2) of any one of the preceding claims, wherein the locking means (16) comprises an actuating device (24) for activating or deactivating the locking means (16).

5. The monument (2) of claim 4, wherein the actuating device (24) is a displaceable or pivotable handgrip, which for locking moves at least one latch body (18) into at least one corresponding latch body retainer (20) via movement means (26) and locks the latch body in the respective end position.

6. The monument (2) of any one of the preceding claims,
wherein the first covering element (28) is a wall element that is movably arranged on the first housing part (4) or on the second housing part (6).

7. The monument (2) of any one of the preceding claims,
wherein the housing comprises a flexible floor (52) that extends between the first housing part (4) and the second housing part (6), and
wherein the first housing part (4) and/or the second housing part (6) comprises receiving means (58) for stowing and releasing an excess floor length.

8. The monument (2) of claim 7,
wherein the flexible floor (52) comprises at least one rigid section (54) and at least one lamellar section (56).

9. The monument (2) of claim 7 or 8,
wherein the floor (52) comprises a flexible floor covering (59) which forms a floor tray via a rim (61) of the floor.

10. The monument (2) of any one of claims 7 to 9, comprising guidance means as receiving means (58) for guiding the excess floor length in vertical direction to an edge region of the first housing part (4) and/or of the second housing part (6).

11. The monument (2) of claim 10, wherein the discharge line (40) comprises at least one first discharge line segment (42) and a second discharge line segment (44) which are interconnected by an articulated joint (46).

12. The monument (2) of any one of the preceding claims, wherein the monument (2) is an on-board toilet monument.

13. The monument (2) of any one of the preceding claims, further comprising
a second item of equipment that is movably arranged on the first housing part (4) or on the second housing part (6),
wherein the second item of equipment can be brought into a position for use and into a fastening position.

14. The monument (2) of claim 13,
wherein the housing is configured to lock the second item of equipment in the fastening position when assuming the first relative position of the first housing part (4) to the second housing part (6).

15. The monument (2) of claim 13 or 14,
wherein the second item of equipment is a second sanitary item (60), in particular a urinal.

16. The monument (2) of any one of the preceding claims, configured for installation in a passenger cabin of an aircraft (64).

17. The use of a monument (2) of any one of claims 1 to 16 in a passenger cabin of a vehicle.

18. An aircraft (64), with a passenger cabin, at least one passenger cabin door (66), and at least one monument according to claim 1.

## Revendications

1. Structure (2) pour une cabine d'un véhicule, la structure (2) présentant :
- une première partie de boîtier (4) avec un côté inférieur (8) et un côté de liaison (12) ;
- une seconde partie de boîtier (6) avec un côté inférieur et un côté de liaison (14) et
- au moins un premier élément de revêtement (28) ;
dans laquelle la première partie de boîtier (4) est mise en place de manière à être fixée avec son côté inférieur (8) à un sol (10) de la cabine,
dans laquelle pour insérer l'une des parties de boîtier (4, 6) dans l'autre partie de boîtier (4, 6) une section extérieure du côté de liaison (12, 14) d'une des parties de boîtier (4, 6) est dimensionnée plus petite qu'une section d'ouverture du côté de liaison (12, 14) de l'autre partie de boîtier (4, 6) et la première partie de boîtier (4) et la seconde partie de boîtier (6) forment un boîtier,
dans laquelle la première partie de boîtier (4) et/ou la seconde partie de boîtier (6) présente des moyens de verrouillage (16) pour arrêter la seconde partie de boîtier (6) dans une première position relative et dans une seconde position relative par rapport à la première partie de boîtier (4) ; et
dans laquelle le premier élément de revêtement (28) est disposé sur la première partie de boîtier (4) ou la seconde partie de boîtier (6) pour recouvrir une fente entre le côté de liaison de la première partie de boîtier (4) et de la seconde partie de boîtier (6) dans la seconde position relative ;
présentant en outre un premier objet d'équipement qui est disposé de manière mobile dans le boîtier et peut être arrêté dans une première position de fonctionnement et dans une seconde position de fonctionnement ;
dans laquelle le premier objet d'équipement est un premier objet sanitaire (36) comportant une évacuation (38), et
dans laquelle l'évacuation (38) est reliée à un conduit d'évacuation (40) dont les extrémités sont mobiles l'une part rapport à l'autre.

2. Structure (2) selon la revendication 1, dans laquelle le moyen de verrouillage (16) est mis en place de manière à relier la première partie de boîtier (4) et la seconde partie de boîtier (6) l'une à l'autre de manière rigide si besoin.

3. Structure (2) selon la revendication 1, dans laquelle le moyen de verrouillage (16) est mis en place de manière à relier la seconde partie de boîtier (6) si besoin au plancher de cabine (10) et/ou à un plafond de cabine.

4. Structure (2) selon une des revendications précédentes, dans laquelle le moyen de verrouillage (16) présente un dispositif d'actionnement (24) pour activer ou désactiver le moyen de verrouillage (16).

5. Structure (2) selon la revendication 4, dans laquelle le dispositif d'actionnement (24) est une poignée coulissante ou rotative qui déplace pour verrouiller par l'intermédiaire de moyens de déplacement (26) au moins un corps de verrou (18) dans au moins un logement de corps de verrou correspondant (20) et verrouille dans la position finale respective.

6. Structure (2) selon une des revendications précédentes,
dans laquelle le premier élément de revêtement (28) est un élément de paroi disposé de manière mobile sur la première partie de boîtier (4) ou la seconde partie de boîtier (6).

7. Structure (2) selon une des revendications précédentes,
dans laquelle le boîtier présente un plancher souple (52) qui s'étend entre la première partie de boîtier (4) et la seconde partie de boîtier (6) et
dans laquelle la première partie de boîtier (4) et/ou la seconde partie de boîtier (6) présente des moyens de logement (58) pour arrimer et libérer une longueur de plancher excédentaire.

8. Structure (2) selon la revendication 7,
dans laquelle le plancher souple (52) présente au moins un premier segment fixe (54) et au moins un segment en forme de lamelles (56).

9. Structure (2) selon la revendication 7 ou 8,
dans laquelle le plancher (52) présente un revêtement de sol souple (59) qui forme une cuve par l'intermédiaire d'un rebord (61) du plancher.

10. Structure (2) selon une des revendications 7 à 9, présentant des moyens de guidage servant de moyens de logement (58) pour guider la longueur de plancher excédentaire en direction verticale dans une zone de bordure de la première partie de boîtier (4) et/ou de la seconde partie de boîtier (6).

11. Structure (2) selon la revendication 10, dans laquelle le conduit d'évacuation (40) présente au moins une première pièce partielle de conduit d'évacuation (42) et une seconde pièce partielle de conduit d'évacuation (44) qui sont reliées l'une à l'autre par l'intermédiaire d'une articulation (46).

12. Structure (2) selon une des revendications précédentes, dans laquelle la structure (2) est une structure de toilettes de bord.

13. Structure (2) selon une des revendications précédentes, présentant en outre un second objet d'équipement disposé de manière mobile sur la première partie de boîtier (4) ou la seconde partie de boîtier (6),
dans laquelle le second objet d'équipement peut être amené dans une position d'utilisation et dans une position d'arrêt.

14. Structure (2) selon la revendication 13,
dans laquelle le boîtier est mis en place de manière à verrouiller le second objet d'équipement dans la position d'arrêt lors du positionnement dans la première position relative de la première partie de boîtier (4) par rapport à la seconde partie de boîtier (6).

15. Structure (2) selon la revendication 13 ou 14,
dans laquelle le second objet d'équipement est un second objet sanitaire (60), en particulier un urinoir.

16. Structure (2) selon une des revendications précédentes, conçue pour être montée dans une cabine passagers d'un avion (64).

17. Utilisation d'une structure (2) selon une des revendications 1 à 16 dans une cabine passagers d'un véhicule.

18. Avion (64), comportant une cabine passagers, au moins une porte de cabine passagers (66) et au moins une structure selon la revendication 1.
